# EUROPEAN PATENT SPECIFICATION

(11) **EP 2 274 353 B1**
(45) Date of publication and mention of the grant of the patent: **14.08.2013**
(21) Application number: 09724985.8
(22) Date of filing: 19.03.2009
(51) Int. Cl.: C08G 18/02, C08G 18/08, C08G 18/09, C08G 18/12, C08G 18/28, C08G 18/75, C08G 18/79, C09D 175/04, C07C 267/00

(54) **POLYCARBODIIMIDES**
POLYCARBODIIMIDE
POLYCARBODIIMIDES

(30) Priority: 27.03.2008 US 56306
(43) Date of publication of application: 19.01.2011
(73) Proprietor: PPG Industries Ohio, Inc., Cleveland, OH 44111 (US)
(72) Inventor: AMBROSE, Ronald, R., Loganville GA 30052-4700 (US); CHASSER, Anthony, M., Allison Park PA 15101 (US); FUHRY, Mary, Ann, M., Butler, PA 16001 (US); ZHOU, Hongying, Allison Park, PA 15101 (US); MCCOLLUM, Gregory, J., Gibsonia, PA 15044 (US); SCHWENDEMAN, Irina, G., Wexford, PA 15090 (US)
(74) Representative: polypatent BGL
(86) International application number: PCT/US2009/037590
(87) International publication number: WO 2009/120559

(56) References cited:
- WO-A-2007/089142
- US-A- 5 637 769
- US-A- 5 866 715
- US-A1- 2006 106 189

## Description

### FIELD OF THE INVENTION

The present invention relates to polycarbodiimides, processes for their preparation; to water-based coating compositions containing the polycarbodiimides and to the use of such water-based coating compositions to coat various substrates leather, artificial leather and fibrous substrates.

### BACKGROUND OF THE INVENTION

Many substrates, such as textiles, thermoplastic urethane, ethylene vinyl acetate foam and leather, have a significant amount of flexibility. It is often desirable to coat these substrates with a coating to improve appearance, water resistance, chemical resistance, abrasion resistance, ultraviolet resistance and durability. It may also be desired to coat or otherwise "decorate" these substrates to provide an improved appearance, apply a pattern, and the like. Many coatings that improve these properties are rigid coatings suitable for use on rigid substrates. When a rigid coating, such as an acrylic coating, is applied to a flexible substrate, the coating will often crack and peel away from the substrate when the substrate is flexed. Accordingly, a flexible coating suitable for use on flexible substrates is desired.

Leather, including artificial leather, and fibrous materials such as woven or non-woven fabrics are used in the manufacture of footware. For certain footware such as athletic footware, it is becoming fashionable to impart color to the substrates. Typically, this is done by applying a color-imparting surface coating to the substrate. For this application, the coating composition typically contains a color-imparting pigment or dye and a resinous binder. The resinous binder should provide adhesion, flexibility, abrasion resistance and resistance to ultraviolet light to the substrate. In addition, these properties should be obtained by processing the coating at low temperature such as room temperature. In addition, because of environmental concerns, the coating should preferably be water-based.

Water-based coating compositions based on carboxylic acid group-containing polymers and polycarbodiimide crosslinking agents are known for such applications. Typically, a polycarbodiimide of an aliphatic or cycloaliphatic polyisocyanate is prepared and dispersed in aqueous medium with an amine salt of a carboxylic acid group-containing polymer. To help in dispersing the polycarbodiimide and in stabilizing the resinous dispersion, the polycarbodiimide is terminated with hydrophilic groups such as a polyalkoxyalcohol. Such hydrophilic polycarbodiimides are described in U.S. 2006/0106189. However, there are difficulties associated with the polycarbodiimides prepared with polyoxyalkylene alcohols. The polycarbodiimides undergo an unusual phase transformation during their preparation. They are liquids at the reaction temperature of about 140ºC, and become solid on cooling and then become a liquid again on further cooling to room temperature. This presents considerable problems where the polycarbodiimides are prepared in large quantities. Having to wait until the polycarbodiimide reaction product has cooled to room temperature before discharging the polycarbodiimide is a significant problem. For commercial size reactors, this could take long time unless expensive external cooling is applied. Also, the stability of aqueous dispersions of such polycarbodiimides is suspect and U.S. 2004/0106189 discloses a separate step of adding base to stabilize the dispersion. Although possible, this adds a step in the manufacturing process, which increases the manufacturing cost.

### SUMMARY OF THE INVENTION

The invention relates to a process for preparing a polycarbodiimide comprising:
(a) heating a polyisocyanate in the presence of a catalyst to form a polycarbodiimide having terminal NCO functionality wherein an active hydrogen-containing material is added before, during or after polycarbodiimide formation;
(b) reacting the polycarbodiimide of (a) with a polyether amine having a molecular weight greater than 500 and having a mole ratio of ethylene oxide to propylene oxide greater than 1:1.

Also, the invention relates to a polycarbodiimide having a structural formula selected from (a) or (b) below, including mixtures thereof. 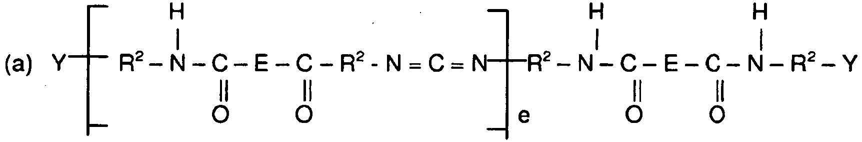 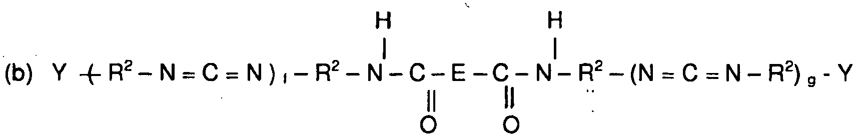 where e is an integer of from 2 to 20; f and g are each at least 1, and f+g is an integer up to 20; E is a radical selected from 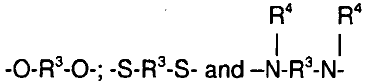 where R² and R³ are hydrocarbon radicals; R⁴ is hydrogen or a hydrocarbon radical; Y is a radical of the structure: 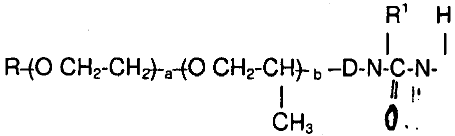 where R is C₁ to C₄ alkyl; a is 5 to 50 and b is 0 to 35, and when b is present the mole ratio of a to b is at least 1:1; R¹ is hydrogen or a hydrocarbon radical and D is a divalent linking group or a chemical bond.

In another embodiment, the invention relates to a thermosetting water-based composition comprising a polycarbodiimide modified for hydrophilicity and a carboxyl group-containing resin wherein the polycarbodiimide has a structure such that a carbodiimide or a polycarbodiimide unit is attached to a unit derived from a polyol, polyamine or polythiol via a urethane, urea or thiourethane bond and a hydrophilic unit occurs at one or more terminal positions of the polycarbodiimide, wherein the hydrophilic unit is derived from a polyether amine having a molecular weight of at least 500; having a mole ratio of ethylene oxide to propylene oxide greater than 1:1 and is attached to the polycarbodiimide via a urea linkage.

In yet another embodiment, the invention relates to a method of forming a coating on a leather, artificial leather, textile fabric, fibers and non-woven substrates comprising:
(a) applying a water-based coating composition to the substrate,
(b) coalescing the coating composition to form a substantially continuous film, and
(c) heating the film to form a cured coating;
   wherein the water-based composition comprises a carboxyl group-containing resin and a polycarbodiimide modified for hydrophilicity and wherein the polycarbodiimide has a structure such that a carbodiimide unit or a polycarbodiimide unit is attached to a unit selected from urethane, thiourethane or urea and a hydrophilic unit derived from a polyether amine having a molecular weight greater than 500 and having a mole ratio of ethylene oxide to propylene oxide greater than 1:1; the hydrophilic unit occurs at one or more terminal positions of the polycarbodiimide via a urea linkage.

### DETAILED DESCRIPTION

Plural includes singular and visa versa. For example, although reference is made herein, including the claims, to "a" polyisocyanate, "a" polycarbodiimide, "an" active hydrogen containing material, "a" polyether amine and the like, one or more of any of these or other components can be used.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances.

The term "polymer" is also meant to include copolymer and oligomer.

Acrylic and methacrylic are designated as (meth)acrylic.

Aliphatic and cycloaliphatic are designated as (cyclo)aliphatic.

The polycarbodiimides of the present invention are prepared by reacting a polyisocyanate in the presence of a suitable catalyst to form a polycarbodiimide having terminal NCO-functionality, wherein an active hydrogen-containing compound is added before, during or after polycarbodiimide formation.

The polyisocyanate that is used in the instant invention can be an aliphatic, including cycloaliphatic, or an aromatic polyisocyanate or mixture of the two. Aliphatic including cycloaliphatic polyisocyanates are particularly suitable since it has been found that these may provide better color stability in the resultant coating. The polyisocyanates can contain from 2 to 4, such as 2 isocyanate groups per molecule. Examples of suitable higher polyisocyanates are 1,2,4-benzene triisocyanate and polymethylene polyphenyl isocyanate. Examples of suitable aromatic diisocyanates are 4,4'-diphenylmethane diisocyanate, 1,3-phenylene diisocyanate, 1,4-phenylene diisocyanate and tolylene diisocyanate. Examples of suitable aliphatic diisocyanates are straight chain aliphatic diisocyanates such as 1,4-tetramethylene diisocyanate and 1,6-hexamethylene diisocyanate. Also, cycloaliphatic diisocyanates can be employed and may impart better color stability and/or abrasion resistance to the product. Examples include 1,4-cyclohexyl diisocyanate, isophorone diisocyanate, alpha, alpha-xylylene diisocyanate and 4,4-methylene-bis(cyclohexyl isocyanate). Substituted organic polyisocyanates can also be used in which the substituents are nitro, chloro, alkoxy and other groups that are not reactive with hydroxyl groups or active hydrogens and provided the substituents are not positioned to render the isocyanate group unreactive.

The polyisocyanate can be an NCO-containing adduct such as would be formed for example when the active hydrogen-containing compound is present before or during polycarbodiimide formation.

The active hydrogen-containing compound is a chain extender or spacer linking polyisocyanates together to form NCO-adducts or to link NCO-functional polycarbodiimides together. Any suitable organic compound containing active hydrogens may be used. The term "active hydrogen atoms" refers to hydrogens which, because of their position in the molecule, display activity according to the Zerewitinoff test. Accordingly, active hydrogens include hydrogen atoms attached to oxygen, nitrogen, or sulfur, and thus useful compounds will include those having at least two of these groups (in any combination)

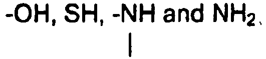

The moieties attached to each group can be aliphatic, including cycloaliphatic, aromatic, or of a mixed type with aliphatic and cycloaliphatic moieties being particularly suitable.

The active hydrogen-containing material can contain from 2 to 4, particularly suitable 2 active hydrogens per molecule.

Examples of such compounds include amines, which includes polyamines, aminoalcohols, mercapto-terminated derivatives, and alcohols that includes polyhydroxy materials (polyols) that are particularly suitable because of the ease of reaction with polyisocyanates. Also polyols generally give no side reactions, giving higher yields of urethane product with no by-product and the products are hydrolytically stable. Also, with regard to polyols, there are a wide variety of materials available which can be selected to give a wide spectrum of desired properties. In addition, the polyols have desirable reaction rates with polyisocyanates. Both saturated and unsaturated active hydrogen-containing compounds can be used, but saturated materials are particularly suitable because of superior coating properties.

The polyhydroxyl materials or polyols can be either low or high molecular weight materials and in general will have average hydroxyl values as determined by ASTM designation E-222-67, Method B, of 2000 and below, such as between below 2000 and 10. The term "polyol" is meant to include materials having an average of two or more hydroxyl groups per molecule.

The polyols include low molecular weight diols, triols and higher alcohols, low molecular weight amide-containing polyols and higher polymeric polyols such as polyester polyols, polyether polyols, polycarbonate polyols and hydroxy-containing (meth)acrylic polymers. The polymers typically have hydroxyl values of from 10 to 180.

The low molecular weight diols, triols and higher alcohols useful in the instant invention are known in the art. They have hydroxy values of 200 or above, usually within the range of 200 to 2000. Such materials include aliphatic polyols, particularly alkylene polyols containing from 2 to 18 carbon atoms. Examples include ethylene glycol, 1,4-butanediol, 1,6-hexanediol; cycloaliphatic polyols such as 1,2-cyclohexanediol and cyclohexane dimethanol. Examples of triols and higher alcohols include trimethylol propane, glycerol and pentaerythritol. Also useful are polyols containing ether linkages such as diethylene glycol and triethylene glycol and oxyalkylated glycerol and longer chain diols such as dimer diol or hydroxy ethyl dimerate.

To form the polycarbodiimide, the polyisocyanate with or without the active hydrogen-containing compound or the NCO-containing adduct is condensed with the elimination of carbon dioxide to form the polycarbodiimide, that is, a polymer containing -[N=C=N]-ₙ units where n = 2 to 20, such as 2 to 10.

The condensation reaction is typically conducted by taking the solution of the polyisocyanate or the NCO-containing adduct and heating in the presence of suitable catalyst. Such reaction is described, for example by K. Wagner et al., Angew. Chem. Int. Ed. Engl., vol. 20, p. 819-830 (1981). Representative examples of suitable catalysts are described in e.g. U.S. Pat. No. 2,941,988, U.S. Pat. No. 3,862,989 and U.S. Pat. No. 3,896,251. Examples include 1-ethyl-3-phospholine, 1-ethyl-3-methyl-3-phospholine-1-oxide, 1-ethyl-3-methyl-3-phospholine-1-sulfide, 1-ethyl-3-methyl-phospholidine, 1-ethyl-3-methyl-phospholidine-1-oxide, 3-methyl-1-phenyl-3-phospholine-1-oxide and bicyclic terpene alkyl or hydrocarbyl aryl phosphine oxide or camphene phenyl phosphine oxide.

The particular amount of catalyst used will depend to a large extent on the reactivity of the catalyst itself and the polyisocyanate being used. A concentration range of 0.05-5 parts of catalyst per 100 parts of adduct is generally suitable.

The resulting polycarbodiimide has terminal NCO groups that are then reacted with an active hydrogen-containing hydrophilic compound to impart hydrophilicity to the polycarbodiimide enabling it to be dispersed in water. The hydrophilic compounds are typically compounds that are miscible with water in amounts of at least 40% by weight, such as at least 45% by weight, (% by weight based on total weight of hydrophilic compound and water and in certain instance are misciple with water in all proportions. Misciple means the hydrophilic compound will not form a separate phase. The method used for determining water solubility is the shake flask method OPPTS 830.7840 as published by the Enviromental Protection Agency (EPA).

The hydrophilic compound is a polyether amine such as amines, preferably primary amines having a polyether backbone, typically based on ethylene oxide or mixed ethylene oxide and propylene and having a molecular weight greater than 500, such as at least 1000 on a number average basis. Typical amines have the following structural formula: 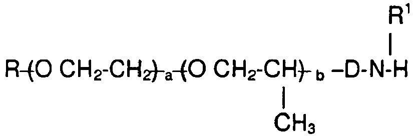 where R is C₁ to C₄ alkyl; a is 5 to 50 and b is 0 to 35, and when b is present the mole ratio of a to b is at least 1:1; R¹ is hydrogen or a hydrocarbon radical and D is a divalent linking group or a chemical bond.

Reaction of the polyether amine with the NCO-containing carbodiimide is conducted with a stoichiometric equivalent of amine to NCO equivalents or a slight excess of amine and at a temperature typically from 80 to 110ºC. until an IR spectrum of the reaction mixture indicates substantially no remaining NCO functionality.

Depending on when the active hydrogen chain extender or spacer is used in the reaction, the polycarbodiimide has a structure such that each carbodiimide unit or polycarbodiimide unit is attached to a unit selected from urethane, thiourethane urea, thiourea and a hydrophilic unit occurs at one or terminal positions of the polycarbodiimide via a urea linkage.

When the active hydrogen chain extender is added before or during polycarbodiimide formation, that is, is used to chain extend a polyisocyanate to form a NCO-adduct, the polycarbodiimide can be represented from the following structural formula when the polyisocyanate and the active hydrogen-containing compound are difunctional: 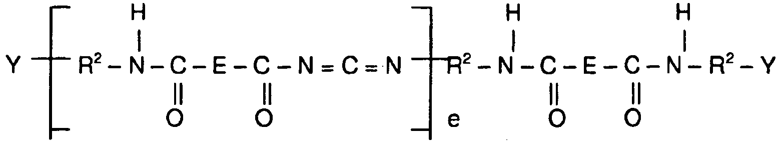 where e is an integer of from 2 to 20, such as 2 to 10; E is a radical selected from O-R²-O; S-R³-S and 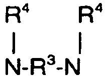 where R² and R³ are each independently hydrocarbon radicals, including an aromatic, cycloaliphatic, aryl and alkyl radical and R⁴ is hydrogen or a hydrocarbon radical such as alkyl containing from 1 to 4 carbon atoms; Y is a radical of the structure: 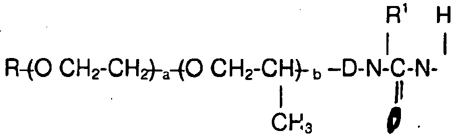 where R is C₁ to C₄ alkyl; a is 5 to 50 and b is 0 to 35, and when b is present the mole ratio of a to b is at least 1:1; R¹ is hydrogen or a hydrocarbon radical and D is a divalent linking group or a chemical bond.

When the active hydrogen chain extender is added after polycarbodiimide formation, that is, is used to chain extend an NCO-functional polycarbodiimide, the polycarbodiimide can be represented from the following structural formula when the NCO-functional polycarbodiimide and the active hydrogen-containing compound are difunctional. 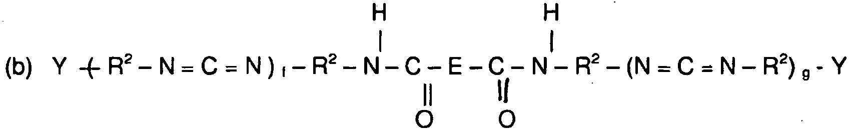 where f and g are each at least 1, and f+g is an integer up to 20 such as up to 10; E is a radical selected from 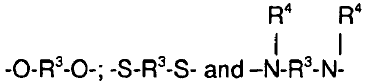 where R² and R³ are hydrocarbon radicals; R⁴ is hydrogen or a hydrocarbon radical; Y is a radical of the structure: 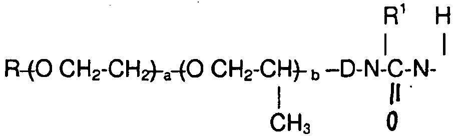 where R is C₁ to C₄ alkyl; a is 5 to 50 and b is 0 to 35, and when b is present the mole ratio of a to b is at least 1:1 ; R¹ is hydrogen or a hydrocarbon radical and D is a divalent linking group or a chemical bond.

In the above structural formulas, R² can be a hydrocarbon radical containing from 2 to 40 carbon atoms, such as an aliphatic radical containing from 4 to 10 carbon atoms or a cycloaliphatic radical containing from 5 to 12 carbon atoms; R³ can be an aliphatic radical containing from 2 to 20 carbon atoms or a cycloaliphatic radical containing from 4 to 14 carbon atoms.

Organic solvent can optionally be present in the synthesis of the polycarbodiimide. Polar water miscible solvents such as N-methyl pyrrolidone can be used in amounts of about 5-25 percent by weight based on weight of the reaction mixture.

The polycarbodiimide prepared as described above is dispersed in aqueous medium by adding the polycarbodiimide to the aqueous medium or adding the aqueous medium to the polycarbodiimide. Addition is done slowly with mild agitation. Preferrably, a surfactant is present in the aqueous medium during the dispersion step.

Suitable surfactants are anionic and non-ionic surfactants including mixtures thereof. Such surfactants are typically used in amounts up to 5, such as 0.5 to 5 percent by weight based on weight of the aqueous dispersion. The surfactants provide stability for the dispersion at elevated temperature, for example, 50-60ºC.

Examples of surfactants are ethoxylated fatty alcohols (EO units: 3 to 50, alkyl; C₈ to C₃₆), ethoxylated mono-, di-, and trialkylphenols (EO units: 3 to 50, alkyl: C₄ to C₉), alkali metal salts of dialkyl esters of sulfosuccinic acid and also alkali metal salts and ammonium salts of alkyl sulfates (alkyl: C₈ to C₁₂), of ethoxylated alkanols (EO units: 4 to 30, alkyl: C₁₂ to C₁₈), of ethoxylated alkylphenols (EO units: 3 to 50, alkyl: C₄ to C₉), of alkylsulfonic acids (alkyl: C₁₂ to C₁₈) and of alkylarylsulfonic acids (alkyl: C₉ to C₁₈).

The polycarbodiimide modified for hydrophilicity as described can be used as a crosslinker for thermosetting water-based coating compositions in combination with a carboxyl group-containing resin.

The carboxyl-containing aqueous resin composition within the thermosetting water-borne coating composition of the present invention is not particularly restricted but includes aqueous dispersions or solutions of a carboxyl-containing resin neutralized with a neutralizing agent.

The acid value of the resin solid as resulting from the carboxyl groups of the carboxyl-containing resin is not particularly restricted but, from the viewpoint of storage stability and water resistance of the coating film, it is typically 2 to 200. In particular when the above resin is used in the form of aqueous dispersions, the acid value of the resin solid is usually 2 to 30. When it is used in water-soluble form, the acid value of the resin solid is typically 20 to 200. The hydroxy value of the resin solid is not particularly restricted and can range from 0 to 300 but, from the storage stability viewpoint, it is usually within the range of 10 to 300, more preferably 20 to 200.

The above neutralizing agent is not particularly restricted but includes, among others, organic amines such as monomethylamine, dimethylamine, trimethylamine, triethylamine, diisopropylamine, monoethanolamine, diethanolamine and dimethylethanolamine, and inorganic bases such as sodium hydroxide, potassium hydroxide and lithium hydroxide. The degree of neutralization is not particularly restricted but can judiciously be selected according to the molecular weight and acid value of the resin and is, for example, 20 to 120%.

The above carboxyl-containing resin is not particularly restricted but may be, for example, a carboxyl-containing polyester resin, acrylic resin or polyurethane resin.

The carboxyl-containing polyester resin can be prepared by condensation in the conventional manner.

The carboxyl-containing polyester resin is produced from an alcohol component and an acid component. The polyester resin so referred to herein includes the so-called alkyd resins as well.

As the above alcohol component, there maybe specifically mentioned those having two or more hydroxy groups within each molecule, such as triols such as trimethylolpropane and hexanetriol, and diols such as propylene glycol, neopentyl glycol, butylene glycol, hexylene glycol, octylene glycol, 1,6-hexanediol, 1,8-octanediol, 1,9-nonanediol, 1,10-decanediol, 1,12-dodecanediol, 1,2-cyclohexanediol, 1,3-cyclohexanediol, 1,4-cyclohexanediol, hydrogenated bisphenol A, caprolactone diol and bishydroxyethyltaurine. The above alcohol component may comprise two or more species.

The above acid component specifically includes those having two or more carboxyl groups within each molecule, for example aromatic dicarboxylic acids such as phthalic acid and isophthalic acid, aliphatic dicarboxylic acids such as adipic acid, azelaic acid and tetrahydrophthalic acid, and tricarboxylic acids such as trimellitic acid. Furthermore, mention may be made of long-chain fatty acids such as stearic acid, lauric acid and like ones, oleic acid, myristic acid and like unsaturated ones, natural fats or oils such as castor oil, palm oil and soybean oil and modifications thereof. The above acid component may comprise two or more species.

Diacids and diols of fatty acids such as EMPOL 1010 fatty diacid from the Cognis Emery Group can be used or its corresponding diol can be used.

Furthermore, as the one having a hydroxyl group(s) and a carboxyl group(s) within each molecule, there may be mentioned hydroxycarboxylic acids such as dimethylolpropionic acid and the like.

In cases where the polyester resin obtained has hydroxy groups, the whole or part thereof may be modified with an acid anhydride, such as phthalic anhydride, succinic anhydride, hexahydrophthalic anhydride or trimellitic anhydride, so that the resin may have carboxyl groups.

The above carboxyl-containing acrylic resin can be obtained in the conventional manner, specifically by solution or emulsion polymerization.

For example, the carboxyl-containing acrylic resin can be obtained from a carboxyl-containing ethylenically unsaturated monomer and another ethylenically unsaturated monomer.

The carboxyl-containing ethylenically unsaturated monomer specifically includes acrylic acid, methacrylic acid, ethacrylic acid, crotonic acid, maleic acid, fumaric acid, itaconic acid, half esters thereof such as maleic acid ethyl ester, fumaric acid ethyl ester and itaconic acid ethyl ester, succinic acid mono (meth) acryloyloxyethyl ester, phthalic acid mono(meth)acryloyloxyethyl ester and the like. The carboxyl-containing ethylenically unsaturated monomer may comprise two or more species.

The other ethylenically unsaturated monomer specifically includes hydroxy-containing ethylenically unsaturated monomers such as 2-hydroxyethyl acrylate, 2-hydroxyethyl methacrylate, 4-hydroxybutyl acrylate, 4-hydroxybutyl methacrylate and products derived therefrom by reaction with lactones, amide-containing ethylenically unsaturated monomers such as acrylamide, methacrylamide, N-isopropylacrylamide, N-butylacrylamide, N,N-dibutylacrylamide, hydroxymethylacrylamide, methoxymethylacrylamide and butoxymethylacrylamide and like (meth)acrylamides and, further, nonfunctional ethylenically unsaturated monomers such as styrene, alpha-methylstyrene, acrylate esters (e.g. methyl acrylate, ethyl acrylate, butyl acrylate, 2-ethylhexyl acrylate) and methacrylate esters (e.g. methyl methacrylate, ethyl methacrylate, butylmethacrylate, isobutylmethacrylate, tert-butyl methacrylate, 2-ethylhexyl methacrylate, lauryl methacrylate), and so forth. The above other ethylenically unsaturated monomer may comprise two or more species.

For obtaining the desired resin by emulsion polymerization, specifically a carboxyl-containing ethylenically unsaturated monomer, another ethylenically unsaturated monomer and an emulsifier are subjected to polymerization in water. As specific examples of the carboxyl-containing ethylenically unsaturated monomer and of the other ethylenically unsaturated monomer, there may be mentioned those already mentioned hereinabove. The emulsifier is not particularly restricted but may be any of those well known to a skilled person in the art.

The carboxyl-containing polyurethane resin mentioned above can be produced, for example, by reacting a compound having an isocyanato group at both termini and a compound having two hydroxy groups and at least one carboxyl group.

The compound having an isocyanato group at both termini can be prepared, for example, by reacting a hydroxy-terminated polyol and a diisocyanate compound. As the hydroxy-terminated polyol and as the diisocyanate, there may be mentioned those polyols and those organic diisocyanate compounds that have been mentioned hereinabove with respect to the carbodiimide compound modified for hydrophilicity. The compound having two hydroxy groups and at least one carboxyl group is, for example, dimethylolacetic acid, dimethylolpropionic acid or dimethylolbutyric acid.

The thermosetting water-borne coating composition of the present invention may comprise two or more species of the carboxyl-containing resin.

The mole ratio of the total number of carbodiimide within the thermosetting water-borne coating composition to the total number of carboxylic acid groups within the polycarbodiimide compound modified for hydrophilicity is 0.05 to 3/1, such as 0.05 to 2/1.

The thermosetting water-borne coating composition of the present invention can further contain an auxiliary crosslinking agent corresponding to the functional group within the carboxyl-containing aqueous resin composition. When, for example, the carboxyl-containing aqueous resin composition is a hydroxy-containing one, the auxiliary crosslinking agent may be an amino resin or (blocked) polyisocyanate, for instance. It may comprise a single species or two or more species. As specific examples of the amino resin, there may be mentioned alkoxylated melamine-formaldehyde or paraformaldehyde condensation products, for example condensation products from an alkoxylated melamine-formaldehyde such as methoxymethylolmelamine, isobutoxymethylolmelamine or n-butoxymethylolmelamine, as well as such commercial products available under the trademark Cymel 303. As specific examples of the above (blocked) polyisocyanate compound, there may be mentioned polyisocyanates such as trimethylene diisocyanate, hexamethylene diisocyanate, xylylene diisocyanate and isophoronediisocyanate, and derivatives thereof obtained by addition of an active hydrogen-containing blocking agent such as an alcohol compound or an oxime compound and capable of regenerating an isocyanato group by dissociation of the blocking agent upon heating. The content of the auxiliary crosslinking agent is not particularly restricted but may adequately be selected by one having an ordinary skill in the art according to the functional group value of the carboxyl-containing aqueous resin composition, the auxiliary crosslinking agent species and so forth.

The thermosetting water-borne coating composition of the present invention may also contain a colorant. As used herein, the term "colorant" means any substance that imparts color and/or other opacity and/or other visual effect to the composition. The colorant can be added to the coating in any suitable form, such as discrete particles, dispersions, solutions and/or flakes. A single colorant or a mixture of two or more colorants can be used in the coatings of the present invention.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coatings by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black and mixtures thereof. Transparent pigments such as those available, from Clariant can be used. The terms "pigment" and "colored filler" can be used interchangeably.

Example dyes include, but are not limited to, those that are solvent and/or aqueous based such as phthalo green or blue, iron oxide, bismuth vanadate, anthraquinone, perylene, aluminum and quinacridone.

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemical, Inc.

As noted above, the colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions can include colorants such as pigments or dyes having a particle size of less than 150 nm, such as less than 70 nm, or less than 30 nm. Nanoparticles can be produced by milling stock organic or inorganic pigments with grinding media having a particle size of less than 0.5 mm. Example nanoparticle dispersions and methods for making them are identified in U.S. Patent No. 6,875,800 B2
Nanoparticle dispersions can also be produced by crystallization, precipitation, gas phase condensation, and chemical attrition (i.e., partial dissolution). In order to minimize re-agglomeration of nanoparticles within the coating, a dispersion of resin-coated nanoparticles can be used. As used herein, a "dispersion of resin-coated nanoparticles" refers to a continuous phase in which is dispersed discreet "composite microparticles" that comprise a nanoparticle and a resin coating on the nanoparticle. Example dispersions of resin-coated nanoparticles and methods for making them are identified in United States Patent Application Publication 2005-0287348 A1, filed June 24, 2004, U.S. Provisional Application No. 60/482,167 filed June 24, 2003, and United States Patent Application Serial No. 11/337,062, filed January 20, 2006

Example special effect compositions that may be used in the compositions of the present invention include pigments and/or compositions that produce one or more appearance effects such as reflectance, pearlescence, metallic sheen, phosphorescence, fluorescence, photochromism, photosensitivity, thermochromism, goniochromism and/or color-change. Additional special effect compositions can provide other perceptible properties, such as opacity or texture. In a non-limiting embodiment, special effect compositions can produce a color shift, such that the color of the coating changes when the coating is viewed at different angles. Example color effect compositions are identified in U.S. Patent No. 6,894,086. Additional color effect compositions can include transparent coated mica and/or synthetic mica, coated silica, coated alumina, a transparent liquid crystal pigment, a liquid crystal coating, and/or any composition wherein interference results from a refractive index differential within the material and not because of the refractive index differential between the surface of the material and the air.

In general, the colorant can be present in any amount sufficient to impart the desired visual and/or color effect. The colorant may comprise from 1 to 65 weight percent of the present compositions, such as from 3 to 40 weight percent or 5 to 35 weight percent, with weight percent based on the total weight of the composition.

The thermosetting water-borne coating composition of the present invention may further contain other optional ingredients such as organic solvents, an antifoaming agent, a pigment dispersing agent, a plasticizer, ultraviolet absorbers, antioxidants, surfactants and the like. These optional ingredients when present are present in amounts up to 30 percent, typically 0.1 to 20 percent by weight based on total weight of the coating composition.

Particularly suitable optional ingredients are organic solvents and surfactants. Examples of solvents are the polar water miscible solvents used in the preparation of the polycarbodiimide such as N-methyl pyrrolidone. Additional solvent such as N-methyl pyrrolidone and various ketones and esters such as methyl isobutyl ketone and butylacetate can be addes. When present, the organic solvent is present in amounts of 5 to 25 percent by weight based on total weight of the coating composition.

The thermosetting water-borne coating composition of the present invention can be produced by any method well known to the one having an ordinary skill in the art using the above components as raw materials.

The method of forming a coating film according to the present invention comprises applying the above thermosetting water-borne coating composition to the surface of a substrate or article to be coated, coalescing the coating composition to form a substantially continuous film and then curing the thus-obtained water-borne coat. The method of forming a coating film according to the present invention uses the above thermosetting water-borne coating composition and, even when the baking temperature is relatively low, curing is possible. Curing can occur at ambient temperature of 20°C to 175°C.

The coating compositions used according to the present invention can be applied to flexible substrates, including textiles, in any known manner such as brushing, spraying, rolling, roll coating, slot coating and/or dipping. The coatings can also be applied by any known manner of dying, printing, or coloring, such as silkscreening, ink-jet printing, jet dying, jet injection dying, transfer printing and the like. Such methods can be computer controlled, as will be understood by one skilled in the art, and may involve pixel-wise application of color to a substrate such as is discussed in U.S. Patent Nos. 6,792,329 and 6,854,146.
A "pixel" is the smallest area or location in a pattern or on a substrate that can be individually assignable or addressable with a given color. For example, such methods can be used to print a pattern and/or color onto a substrate; a "pattern" on a substrate can mean that the substrate has been colored, such as on a pixel-by-pixel basis, by application of a colorant to the substrate, typically in a predetermined manner. In the various methods for dying, printing or otherwise imparting color to a substrate, computers and digital design software can be used to develop a digital design that is fed to a digitally controlled dying, printing or coloring apparatus; such apparatus are commercially available and can be used in accordance with the manufacturers' instructions.

The curing of these coatings can comprise a flash at ambient or elevated temperatures followed by a thermal bake in order to obtain optimum properties. The coatings of the present invention are typically deposited on the flexible substrate to a thickness of from 0.1 to 3 mils (2.54 -16.2 micrometers). In one embodiment, the coating is deposited to a thickness of from 0.5 to 1.0 mils (12.7 - 25.4 micrometers).

As used herein, the term "flexible substrate" refers to a substrate that can undergo mechanical stresses, such as bending or stretching and the like, without significant irreversible change. In certain embodiments, the flexible substrates are compressible substrates. "Compressible substrate" and like terms refer to a substrate capable of undergoing a compressive deformation and returning to substantially the same shape once the compressive deformation has ceased. The term "compressive deformation" and like terms mean a mechanical stress that reduces the volume at least temporarily of a substrate in at least one direction. Examples of flexible substrates includes non-rigid substrates, such as woven and nonwoven fiberglass, woven and nonwoven glass, woven and nonwoven polyester, thermoplastic urethane (TPU), synthetic leather, natural leather, finished natural leather, finished synthetic leather, foam, polymeric bladders filled with air, liquid, and/or plasma, urethane elastomers, synthetic textiles and natural textiles. "Foam" can be a polymeric or natural material comprising open cell foam and/or closed cell foam. "Open cell foam" means that the foam comprises a plurality of interconnected air chambers; "closed cell foam" means that the foam comprises discrete closed pores. Example foams include but are not limited to polystyrene foams, polyvinyl acetate and/or copolymers, polyvinyl chloride and/or copolymers, poly(meth)acrylimide foams, polyvinylchloride foams, polyurethane foams, and polyolefinic foams and polyolefin blends. Polyolefinic foams include but are not limited to polypropylene foams, polyethylene foams and ethylene vinyl acetate ("EVA") foams. EVA foam can include flat sheets or slabs or molded EVA foams, such as shoe midsoles. Different types of EVA foam can have different types of surface porosity. Molded EVA can comprise a dense surface or "skin", whereas flat sheets or slabs can exhibit a porous surface. "Textiles" can include natural and/or synthetic textiles such as fabric, vinyl and urethane coated fabrics, mesh, netting, cord, yarn and the like, and can be comprised, for example, of canvas, cotton, polyester, KELVAR, polymer fibers, polyamides such as nylons and the like, polyesters such as polyethylene terephthalate and polybutylene terephthalate and the like, polyolefins such as polyethylene and polypropylene and the like, rayon, polyvinyl polymers such as polyacrylonitrile and the like, other fiber materials, cellulosics materials and the like.

The flexible coatings of the present invention have a wide variety of applications. For example, the flexible substrate can be incorporated into and/or form part of sporting equipment, such as athletic shoes, balls, bags, clothing and the like; apparel; automotive interior components; motorcycle components; household furnishings such as decorative pieces and furniture upholstery; wallcoverings such as wallpaper, wall hangings, and the like; floor coverings such as rugs, runners, area rugs, floor mats, vinyl and other flooring, carpets, carpet tiles and the like.

The following examples illustrate the present invention in further detail. They are, however, by no means limitative of the scope of the invention. Unless otherwise specified, the amounts charged or used ("part(s)") are on the weight basis.

### EXAMPLES

Whereas particular embodiments of this invention have been described above for purposes of illustration, it will be evident to those skilled in the art that numerous variations of the details of the present invention may be made without departing from the invention as defined in the appended claims.

### Example 1

Waterbased polycarbodiimide resin "A" was made as follows:

**Table 1**

| Ingredients | | Parts by Weight |
|---|---|---|
| | Charge #1 | |
| Desmodur W¹ | | 16.68 |
| Phospholene oxide | | 0.25 |

| | Charge #2 | |
|---|---|---|
| Dibutyltin dilaurate | | 0.0015 |

| | Charge #3 | |
|---|---|---|
| N-Methylpyrrolidone | | 10.13 |
| Ethylene glycol | | 0.62 |

| | Charge #4 | |
|---|---|---|
| Jeffamine M1000 (XTJ-506)² | | 18.22 |

| | Charge #5 | |
|---|---|---|
| Deionized water | | 51.84 |
| Abex 2005³ | | 2.25 |
| | | |

| | | |
|---|---|---|
| ¹ Desmodur W is methylene-bis-(4-cyclohexyldiisocyanate) from Bayer Materials Science, LLC ²Jeffamine M1000 is a polyetheramine from Huntsman (mole ratio of EO/PO=6.3, MW=1000) ³Abex 2005 is a proprietary anionic surfactant from Rhodia | | |

Charge #1 was added to a 2-liter, 4-necked flask equipped with a motor driven stainless steel stir blade, a water-cooled condenser, a nitrogen inlet, and a heating mantle with a thermometer connected through a temperature feedback control device. The contents of the flask were heated to 140 ºC and held at that temperature until the isocyanate equivalent weight measured >350eq/g by titration. The temperature was then decreased to 95 ºC and Charge #2 was added. Charge #3 was added over 10 min and the reaction mixture was held at 90-100 ºC until the NCO equivalent weight stalled at about 1300 eq/g. Charge #4 was added and the mixture was held at 90-100 ºC until IR spectroscopy showed the absence of the characteristic NCO band. The batch was cooled to 60-65 ºC, and Charge #5, after being preheated to 60-65 ºC, was added to the reaction flask over 20 min while maintaining the temperature below 65 ºC.

A sample of the polycarbodiimide dispersion was placed in a 120 ºF (49°C) hot room for 4 weeks. The resin remained dispersed, and the viscosity and carbodiimide equivalent weight remained unchanged.

### Example 2

Waterbased polycarbodiimide resin "B" was made as follows:

**Table 2**

| Ingredients | | Parts by Weight |
|---|---|---|
| | Charge #1 | |
| Desmodur W¹ | | 16.03 |
| Phospholene oxide | | 0.24 |

| | Charge #2 | |
|---|---|---|
| Dibutyltin dilaurate | | 0.001 |

| | Charge #3 | |
|---|---|---|
| Ethylene glycol | | 0.64 |

| | Charge #4 | |
|---|---|---|
| Jeffamine M1000 (XTJ-506)² | | 23.57 |

| | Charge #5 | |
|---|---|---|
| Deionized water | | 59.52 |

| | | |
|---|---|---|
| ¹ Desmodur W is methylene-bis-(4-cyclohexyldiisocyanate) from Bayer Materials Science, LLC ²Jeffamine M1000 is a polyetheramine from Huntsman (mole ratio of EO/PO=6.3, MW=1000) ³ Abex 2005 is a proprietary anionic surfactant from Rhodia | | |

Charge #1 was added to a 2-liter, 4-necked flask equipped with a motor driven stainless steel stir blade, a water-cooled condenser, a nitrogen inlet, and a heating mantle with a thermometer connected through a temperature feedback control device. The contents of the flask were heated to 140 ºC and held at that temperature until the isocyanate equivalent weight measured >350eq/g by titration. The temperature was then decreased to 95 ºC and Charge #2 was added. Charge #3 was added over 10 min and the reaction mixture was held at 90-100 ºC until the NCO equivalent weight stalled at about 730 eq/g. Charge #4 was added and the mixture was held at 90-100 ºC until IR spectroscopy showed the absence of the characteristic NCO band. The batch was cooled to 60-65 ºC, and Charge #5, after being preheated to 60-65 ºC, was added to the reaction flask over 20 min while maintaining the temperature below 65 ºC.

A sample of the polycarbodiimide dispersion was placed in a 120°F (49°C) hot room for 4 weeks and the resin remained dispersed.

### Example 3

Waterbased polycarbodiimide resin "C" was made as follows:

**Table 3**

| Ingredients | | Parts by Weight |
|---|---|---|
| | Charge #1 | |
| Desmodur W**¹** | | 19.93 |
| Dibutyltin dilaurate | | 0.0022 |
| N-Methylpyrrolidone | | 4.78 |

| | Charge #2 | |
|---|---|---|
| Ethylene glycol | | 2.35 |

| | Charge #3 | |
|---|---|---|
| Phospholene oxide | | 0.30 |

| | Charge #4 | |
|---|---|---|
| Jeffamine M1000 (XTJ-506)² | | 16.32 |
| N-Methylpyrrolidone | | 4.98 |

| | Charge #5 | |
|---|---|---|
| Deionized water | | 48.82 |
| Abex 2005³ | | 2.51 |
| | | |

| | | |
|---|---|---|
| ¹ Desmodur W is methylene-bis-(4-cyclohexyldiisocyanate) from Bayer Materials Science, LLC ²Jeffamine M1000 is a polyetheramine from Huntsman (mole ratio of EO/PO=6.3, MW=1000) ³Abex 2005 is a proprietary anionic surfactant from Rhodia | | |

Charge #1 was added to a 1-liter, 4-necked flask equipped with a motor driven stainless steel stir blade, a water-cooled condenser, a nitrogen inlet, and a heating mantle with a thermometer connected through a temperature feedback control device. The contents of the flask were heated to 80 ºC and Charge #2 was added at such a rate as to maintain the temperature of the reaction mixture at <120 ºC. After the feed was complete, the reaction mixture was held at 80 ºC until the NCO equivalent weight reached about 358 eq/g. Charge #3 was added and the temperature was increased to 135 ºC. The batch was held at that temperature until the NCO equivalent weight measured about 1600 g/eq by titration. The temperature was lowered to 90-100 ºC and then Charge #4 was added. The batch was held at 90-100 ºC until IR spectroscopy showed the absence of the characteristic NCO band. The batch was cooled to 60-65 ºC, and Charge #5, after being preheated to 60-65 ºC, was added to the reaction flask over 20 min while maintaining the temperature below 65 ºC.

A sample of the polycarbodiimide dispersion was placed in a 120°F (49°C) hot room for 4 weeks and the resin remained dispersed.

### Comparative Example 4

Waterbased polycarbodiimide resin "D" was made as follows:

**Table 4**

| Ingredients | | Parts by Weight |
|---|---|---|
| | Charge #1 | |
| Desmodur W¹ | | 25.29 |
| Phospholene oxide | | 0.39 |

| | Charge #2 | |
|---|---|---|
| Dibutyltin dilaurate | | 0.002 |

| | Charge #3 | |
|---|---|---|
| N-Methylpyrrolidone | | 10.60 |
| Ethylene glycol | | 0.96 |

| | Charge #4 | |
|---|---|---|
| MPEG 350² | | 10.36 |

| | Charge #5 | |
|---|---|---|
| Deionized water | | 50.12 |
| Abex 2005³ | | 2.27 |

| | | |
|---|---|---|
| ¹Desmodur W is methylene-bis-(4-cyclohexyldiisocyanate) from Bayer Materials Science, LLC ²MPEG is methoxypolyethylene glycol, MW=350, from Dow Chemical ³Abex 2005 is a proprietary anionic surfactant from Rhodia | | |

Charge #1 was added to a 2-liter, 4-necked flask equipped with a motor driven stainless steel stir blade, a water-cooled condenser, a nitrogen inlet, and a heating mantle with a thermometer connected through a temperature feedback control device. The contents of the flask were heated to 140 ºC and held at that temperature until the isocyanate equivalent weight measured >350eq/g by titration. The temperature was then decreased to 95 ºC and Charge #2 was added. Charge #3 was added over 10 min and the reaction mixture was held at 90-100 ºC until the NCO equivalent weight stalled at about 1000 eq/g. Charge #4 was added and the mixture was held at 90-100 ºC until IR spectroscopy showed the absence of the characteristic NCO band. The batch was cooled to 60-65 ºC, and Charge #5, after being preheated to 60-65 ºC, was added to the reaction flask over 20 min while maintaining the temperature below 65 ºC. During the dispersion stage, the mixture became extremely viscous and was difficult to stir. Towards the end of the process, the viscosity dropped and the mixture became uniform.

A sample of the polycarbodiimide dispersion was placed in a 120 ºF (49°C) hot room for 1 week. The resin solidified, and it did not become fluid after cooling to ambient temperature.

### Comparative Example 5

Waterbased polycarbodiimide resin "E" was attempted as follows:

**Table 5**

| Ingredients | | Parts by Weight |
|---|---|---|
| | Charge #1 | |
| Desmodur W¹ | | 26.93 |
| Phospholene oxide | | 0.41 |

| | Charge #2 | |
|---|---|---|
| Dibutyltin dilaurate | | 0.002 |

| | Charge #3 | |
|---|---|---|
| Ethylene glycol | | 1.07 |

| | Charge #4 | |
|---|---|---|
| MPEG 350² | | 10.00 |

| | Charge #5 | |
|---|---|---|
| Deionized water | | 61.59 |

| | | |
|---|---|---|
| ¹ Desmodur W is methylene-bis-(4-cyclohexyldiisocyanate) from Bayer Materials Science, LLC ² MPEG is methoxypolyethylene glycol, MW=350, from Dow Chemical ³ Abex 2005 is a proprietary anionic surfactant from Rhodia | | |

Charge #1 was added to a 2-liter, 4-necked flask equipped with a motor driven stainless steel stir blade, a water-cooled condenser, a nitrogen inlet, and a heating mantle with a thermometer connected through a temperature feedback control device. The contents of the flask were heated to 140 ºC and held at that temperature until the isocyanate equivalent weight measured >350eq/g by titration. The temperature was then decreased to 115 °C and Charge #2 was added. Charge #3 was added over 10 min and the reaction mixture was held at 115-120 °C until the NCO equivalent weight stalled at about 730 eq/g. Charge #4 was added and the mixture was held at 100-110 °C until IR spectroscopy showed the absence of the characteristic NCO band. The batch was cooled to 60-65 °C, and Charge #5, after being preheated to 60-65 °C, was added to the reaction flask over 20 min while maintaining the temperature below 65 °C. During the dispersion stage, the mixture became extremely viscous and then it solidified completely.

Insert B from floppy disk

### Examples 7-12

Waterbased polycarbodiimide resins G-1 were made using the process described for resin A in Example 1. The compositions of the resins (in parts by weight) and the quality of the resultant dispersions are summarized in Table 6.

**Table 6**

| Example | 7 | 8 | 9 | 10 * | 11 | 12 |
|---|---|---|---|---|---|---|
| Resin | G | H | I | J | K | L |
| Desmodur W¹ | 22.23 | 10.41 | 9.56 | 32.37 | 20.52 | 16.68 |
| Phospholene oxide | 0.44 | 0.16 | 0.14 | 0.49 | 0.31 | 0.25 |
| Dibutyltin dilaurate | 0.002 | 0.001 | 0.001 | 0.003 | 0.002 | 0.001 |
| N-Methylpyrrolidone | 10.01 | 0 | 10.13 | 15.03 | 9.97 | 0 |
| Ethylene glycol | 0.84 | 0.42 | 0.37 | 1.27 | 0.79 | 0.55 |
| Jeffamine M600² | 16.19 | - | - | - | - | - |
| Jeffamine M2070³ | - | 24.76 | - | - | - | - |
| Jeffamine 2005⁴ | - | - | 25.27 | - | - | - |
| Methoxyethylamine | - | - | - | 2.64 | - | - |
| CD551-PA⁵ | - | - | - | - | 14.82 | - |
| CD553-PA⁶ | - | - | - | - | - | 11.85 |
| Deionized water | 47.80 | 64.25 | 52.36 | 46.01 | 51.31 | 70.67 |
| Abex 2005⁷ | 2.48 | 0 | 2.28 | 2.20 | 2.27 | 0 |
| Stable Dispersion | N | Y | N | N | N | Y |

| | | | | | | |
|---|---|---|---|---|---|---|
| ¹Desmodur W is methylene-bis-(4-cyclohexyldiisocyanate) from Bayer Materials Science, LLC ²effamine M600 is a polyetheramine from Huntsman (mole ratio of EO/PO=0.11, MW=600) ³Jeffamine M2070 is a polyetheramine from Huntsman (mole ratio of EO/PO=3.1, MW=2000) ⁴Jeffamine 2005 is a polyetheramine from Huntsman (mole ratio of EO/PO=0.2, MW=2000) ⁵CD551-PA is the reaction product of n-propylamine with a methoxypolyethylene glycol (MW=350) monoacrylate from Sartomer ⁶CD553-PA is the reaction product of n-propylamine with a methoxypolyethylene glycol (MW=550) monoacrylate from Sartomer ⁷Abex 2005 is a proprietary anionic surfactant from Rhodia ⁸N means did not disperse ⁹Y means formed stable dispersion * not an example according to the invention | | | | | | |

### Examples 13 and Comparative 14

Thermosetting water-based composition comprising a carboxylic acid group containing polyurethane and the polycarbodiimide of Example 1 was prepared. For comparative purpose a similar composition was prepared using the polycarbodiimide of comparative Example 6. The differences between the polycarbodiimides was that ethylene glycol was used to chain extent the polycarbodiimide in Example 13 and no chain extension was used in comparative Example 14. The compositions were prepared from the following ingredients.

| Ingredient | Amount in Grams | |
|---|---|---|
| | Ex. 13 | Comparative Ex. 14 |
| Polyurethane Dispersion¹ | 160 | 160 |
| T-14 Fire Orange² | 10 | 10 |
| TEGO WET 280³ | 3 | 3 |
| BYK 425⁴ | 0.3 | 0.3 |
| BYK 011⁵ | 1 | 1 |
| Polycarbodiimide of Example 1 | 47 | |
| Polycarbodiimide of Comp. Example 5 | | 47 |

| | | |
|---|---|---|
| ¹Polyurethane Dispersion was prepared by reacting in methylethylketone (MEK) solvent isophorone diisocyanate with a polyether diol (POLYMEG 2000) and dimethylol propionic acid (2.85:0.95:1.27 equivalent ratio) to give a NCO-prepolymer having a NCO equivalent of 2663 and an acid value of 21.1. The NCO prepolymer was chain extended in water with adipic dihydrazide and partially neutralized with dimethyl-ethanol amine and vacuum stripped of the MEK to give a 34.66% by weight resin solids dispersion. ² Orange Pigment from Dayglo Color Corp. ³ Silicon flow additive from Goldschmidt Chemical. ⁴ Rhelogy agent from BYK Chemie. ⁵ Degassing agent from BYK Chemie. | | |

The thermosetting compositions were spray applied to substrates as mentioned below, cured at 170°C for 20 minutes to give cured coatings having a film build of about 1 mil. The coated substrates were tested for flexibility and compression resistance. The results of the testing are reported below:

| Example | Compression¹ | Flexibility² |
|---|---|---|
| 13 | Pass | Greater than 40,000 |
| Comparative 14 | Pass | 20,000 |

| | | |
|---|---|---|
| ¹ The compression test is a test devised by NIKE Corp., (KIM Compression) which measures repeated compression simulating the up and down running motion compressing the shok column of an athletic shoe. A flexible polyurethane substrate of approximately 2.5 square centimeters and 2.5 centimeters in thickness coated as described above is placed in a holder and a plate directly above the holder impacts the sample to the extent that the materials is now compressed 50% of its original heights. The compressed dimensions would therefore be approximately 2.5 x 2.5 x 1.75 centimeters. The impacting/compressing repeats itself 5-10 times per second and continues until either the coating fails or the counter reaches 100,000 cycles. One cycle is one compression/one relaxation, two cycles is two compressions/ two relaxations. ² The flexibility test is also a test devised by NIKE Corp. using a Bally Flexometer. In the test a flexible polyurethane substrate of approximately 2.5 square centimeters and 2.5 centimeters in thickness coated as described above is placed in a jig and folded 90 degrees(coating side out) to simulate the bending experience by the front of an athletic shoe when used for running. The sample is given 20,000 folds and inspected for cracks in the coating. If no cracks are evidenced the sample is given another 20,000 folds and examined again crack in the coating. The testing is continued until the coating cracks. | | |

## Claims

1. A process for the preparation of a polycarbodiimide comprising:
(a) heating a polyisocyanate in the presence of a catalyst to form a polycarbodiimide having terminal NCO functionality wherein an active hydrogen-containing material is added before, during or after polycarbodiimide formation:
(b) reacting the polycarbodiimide of (a) with a polyether amine having a molecular weight greater than 500, preferably of at least 1000 and having a mole ratio of ethylene oxide to propylene oxide greater than 1:1, preferably at least 3 to 1.

2. The process of claim 1 in which the polyether amine selected from
a) a polyether amine comprising a primary amine; and
b) a polyether amine having the following structure: 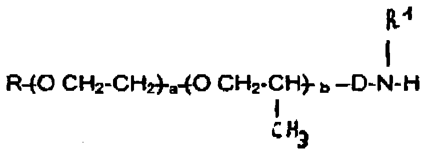 where R is C₁ to C₄ alkyl; a is 5 to 50 and b is 0 to 35; R¹ is hydrogen or a hydrocarbon radical, preferably containing less than 6 carbon atomes, and D is a divalent linking group or a chemical bond.

3. The process of claim 1 in which the polyisocyanate contains from 2 to 4 isocyanate groups.

4. The process of claim 1 in which the polyisocyanate comprises a (cyclo)aliphatic polyisocyanate, whereby the polyisocyanate is preferably selected from isophorone diisocyanate and/or dicyclohexylmethane-4,4' diisocyanate.

5. The process of claim 1 in which the active hydrogen-containing material is selected from:
a) a hydrogen-containing material containing from 2 to 4 active hydrogens;
b) a monomeric polyol having a hydroxyl value of 200 to 2000; and
c) a polymeric polyol selected from polyester polyols, polyether polyols, polycarbonate polyols and hydroxyl containing (meth) acrylic polymers.

6. The process of claim 1 in which the polycarbodiimide has from 2 to 10 repeating carbodiimide groups.

7. The process of claim 1 in which the active hydrogen-containing material is added before or during the polycarbodiimide formation.

8. A polycarbodiimide having a structural formula selected from (a) or (b) including mixtures thereof: 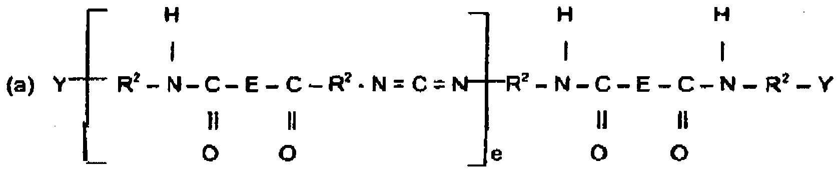 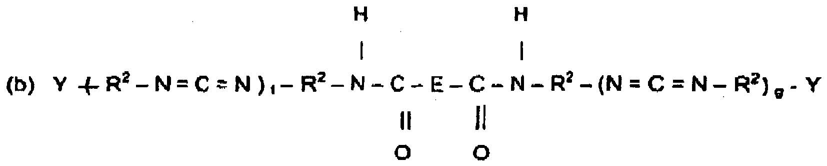 where e is an integer of from 2 to 20: f and g are each at least 1, and f+g is an integer up to 20; E is a radical selected from 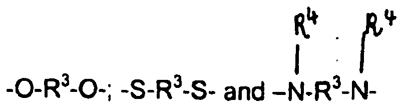 where R² and R³ are hydrocarbon radicals; R⁴ is hydrogen or a hydrocarbon radical; Y is a radical of the structure: 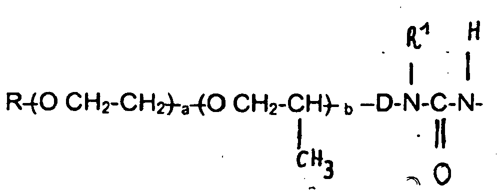 where R is C₁ to C₄ alkyl; a is 5 to 50 and b is 0 to 35, and when b is present the mole ratio of a to b is at least 1:1; R¹ is hydrogen or a hydrocarbon radical and D is a divalent linking group or a chemical bond, preferably R² is a (cyclo)aliphatic radical and if R² is a (cyclo)aliphatic radical E is an -O-R³-O- radical and R³ is an aliphatic radical containing from 1 to 4 carbon atoms.

9. A thermosetting water-based composition comprising a polycarbodiimide modified for hydrophilicity and a carboxyl group containing resin wherein the polycarbodiimide has a structure such that a carbodiimide or a polycarbodiimide unit is attached to a unit derived from a polyol, polyamine or polythiol via a urethane, urea or thiourethane bond and a hydrophilic unit occurs at one or more terminal positions of the polycarbodiimide, wherein the hydrophilic unit is derived from a polyether amine having a molecular weight of at least 500; having a mole ratio of ethylene oxide to propylene oxide greater than 1:1 and is attached to the polycarbodiimide via a urea linkage.

10. The thermosetting water-based composition of claim 9 in which
i) the hydrophilic unit comprises the structure: 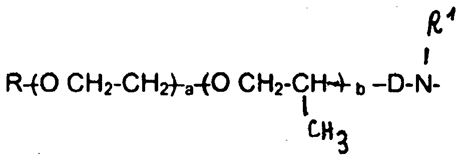 where R is C₁ to C₄ alkyl; a is 5 to 50 and b is 0 to 35; R¹ is hydrogen or a hydrocarbon radical and D is a divalent linking group or a chemical bond attached to the urea linkage; or
ii) the carboxy group-containing resin is selected from a carboxyl group-containing acrylic polymer, a carboxyl group-containing polyester or a carboxyl group-containing polyurethane; or
iii) the ratio of carboxyl groups to carbodiimide groups is from 0.5 to 5.0:1.

11. The thermosetting water-based composition of claim 9 containing
- a surfactant, preferably an anionic surfactant, whereby the surfactant is preferably present in amounts of 0.5 to 5.0 percent by weight based on weight of the coating composition; or
- an organic solvent.

12. A method of forming a coating on a flexible substrate comprising:
(a) applying a water-based coating composition to the substrate,
(b) coalescing the coating composition to form a substantially continuous film, and
(c) heating the film to form a cured coating;
wherein the water-based composition comprises a carboxyl group-containing resin and a polycarbodiimide modified for hydrophilicity and wherein the polycarbodiimide has a structure such that a carbodiimide unit or a polycarbodiimide unit is attached to a unit selected from urethane, thiourethane or urea and a hydrophilic unit derived from a polyether amine having a molecular weight greater than 500 and having a mole ratio of ethylene oxide to propylene oxide greater than 1:1; the hydrophilic unit occurs at one or more terminal positions of the polycarbodiimide via a urea linkage.

13. The method of claim 12 in which the carboxyl group-containing resin is selected from a carboxyl group-containing acrylic polymer, a carboxyl group-containing polyester or a carboxyl group-containing polyurethane.

14. The method of claim 12 in which the mole ratio of carboxyl groups to carbodiimide groups is from 0.5 to 5.0:1.

15. The method of claim 12 in which the hydrophilic unit comprises the structure: 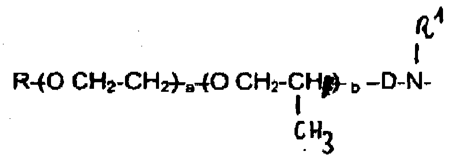 where R is C, to C₄ alkyl; a is 5 to 50 and b is 0 to 35; R¹ is hydrogen or a hydrocarbon radical and D is a divalent linking group or a chemical bond attached to the urea linkage.

## Patentansprüche

1. Verfahren zur Herstellung eines Polycarbodiimids umfassend:
(a) Erwärmen eines Polyisocyanats in Gegenwart eines Katalysators, um ein Polycarbodiimid mit einer terminalen NCO-Funktionalität zu erhalten, wobei ein aktiven Wasserstoff enthaltendes Material vor, während oder nach der Polycarbodiimidbildung zugesetzt wird, (b) Umsetzen des Polycarbodiimids aus (a) mit einem Polyetheramin mit einem Molekulargewicht von größer als 500, vorzugsweise wenigstens 1000, und mit einem Molverhältnis von Ethylenoxid zu Propylenoxid von größer als 1:1, vorzugsweise wenigstens 3:1.

2. Verfahren nach Anspruch 1, bei dem das Polyetheramin ausgewählt ist aus
a) einem Polyetheramin mit einem primären Amin und
b) einem Polyetheramin mit der folgenden Struktur: 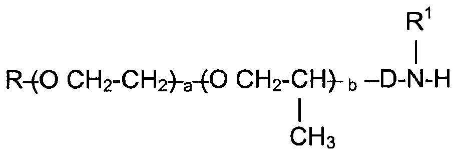 worin R gleich C₁- bis C₄-Alkyl ist, a gleich 5 bis 50 ist und b gleich 0 bis 35 ist, R¹ gleich Wasserstoff oder ein Kohlenwasserstoffrest ist, vorzugsweise mit weniger als 6 Kohlenstoffatomen und D eine divalente Verbindungsgruppe oder eine chemische Bindung ist.

3. Verfahren nach Anspruch 1, bei dem das Polyisocyanat 2 bis 4 Isocyanatgruppen enthält.

4. Verfahren nach Anspruch 1, bei dem das Polyisocyanat ein (cyclo)aliphatisches Polyisocyanat umfasst, wobei das Polyisocyanat vorzugsweise ausgewählt ist aus Isophorondiisocyanat und/oder Dicyclohexylmethan-4,4'-diisocyanat.

5. Verfahren nach Anspruch 1, bei dem das aktiven Wasserstoff enthaltende Material ausgewählt ist aus:
a) einem Wasserstoff enthaltenden Material mit 2 bis 4 aktiven Wasserstoffatomen,
b) einem monomeren Polyol mit einem Hydroxylwert von 200 bis 2000
und
c) einem polymeren Polyol ausgewählt aus Polyesterpolyolen, Polyetherpolyolen, Polycarbonatpolyolen und Hydroxyl enthaltenden (Meth)acrylpolymeren.

6. Verfahren nach Anspruch 1, bei dem das Polycarbodiimid 2 bis 10 sich wiederholende Carbodiimidgruppen aufweist.

7. Verfahren nach Anspruch 1, bei dem das aktiven Wasserstoff enthaltende Material vor oder während der Polycarbodiimidbildung zugesetzt wird.

8. Polycarbodiimid mit einer Strukturformel ausgewählt aus (a) oder (b), einschließlich Mischungen davon: 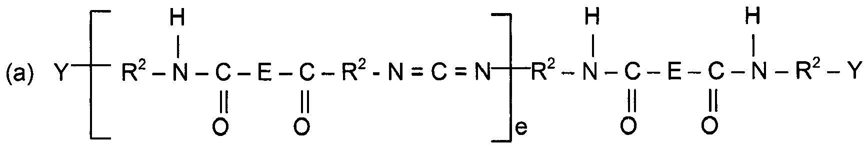 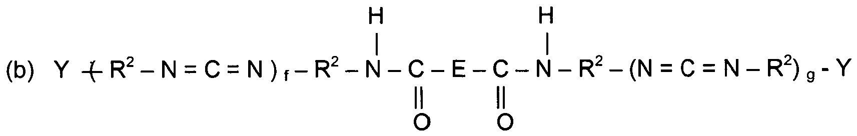 worin e eine ganze Zahl von 2 bis 20 ist, f und g jeweils mindestens 1 sind und f+g eine ganze Zahl von bis zu 20 ist, E ein Rest ausgewählt aus 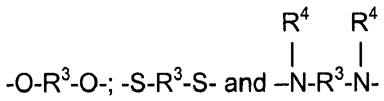 ist, worin R² und R³ Kohlenwasserstoffreste sind, R⁴ Wasserstoff oder ein Kohlenwasserstoffrest ist,
Y ein Rest der Struktur: 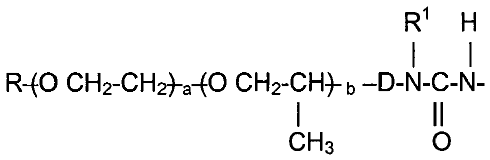 ist, worin R gleich C₁- bis C₄-Alkyl ist, a gleich 5 bis 50 ist und b gleich 0 bis 35 ist, und wenn b vorhanden ist, das Molverhältnis von a:b wenigstens 1:1 beträgt, R¹ Wasserstoff oder ein Kohlenwasserstoffrest ist und D eine divalente Verbindungsgruppe oder eine chemische Bindung ist, vorzugsweise ist R² ein (cyclo)aliphatischer Rest ist, und wenn R² ein (cyclo)aliphatischer Rest ist, E ein -O-R³-O-Rest und R³ ist ein aliphatischer Rest, der 1 bis 4 Kohlenstoffatome enthält, ist.

9. Wärmehärtende Zusammensetzung auf Wasserbasis enthaltend ein Polycarbodiimid, das zur Erreichung von Hydrophilie modifiziert ist, und ein Carboxylgruppen enthaltendes Harz, wobei das Polycarbodiimid eine Struktur aufweist, so dass eine Carbodiimid- oder eine Polycarbodiimideinheit an eine Einheit, die sich von einem Polyol, Polyamin oder Polythiol ableitet, über eine Urethan-, Harnstoff- oder eine Thiourethanbindung gebunden ist, und eine hydrophile Einheit an einer oder mehreren endständigen Positionen des Polycarbodiimids auftritt, wobei die hydrophile Einheit sich von einem Polyetheramin mit einem Molekulargewicht von wenigstens 500 und einem Molverhältnis von Ethylenoxid zu Propylenoxid von größer als 1:1 ableitet und an das Polycarbodiimid über eine Harnstoffverknüpfung gebunden ist.

10. Wärmehärtende Zusammensetzung auf Wasserbasis nach Anspruch 9, bei der
i) die hydrophile Einheit die Struktur aufweist: 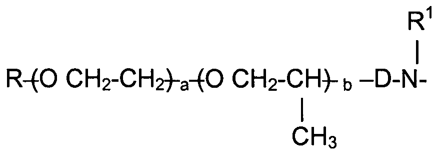 worin R gleich C₁- bis C₄-Alkyl ist, a gleich 5 bis 50 ist und b gleich 0 bis 35 ist, R¹ Wasserstoff oder ein Kohlenwasserstoffrest ist und D eine divalente Verbindungsgruppe oder eine chemische Bindung ist, verbunden mit einer Harnstoffverknüpfung, oder
ii) das Carboxylgruppen enthaltende Harz ausgewählt ist aus einem Carboxylgruppen enthaltenden Acrylpolymer, einem Carboxylgruppen enthaltenden Polyester oder einem Carboxylgruppen enthaltenden Polyurethan, oder
iii) das Verhältnis von Carboxylgruppen zu Carbodiimidgruppen 0,5 bis 5,0:1 beträgt.

11. Wärmehärtende Zusammensetzung auf Wasserbasis nach Anspruch 9, die
- ein oberflächenaktives Mittel, vorzugsweise ein anionisches oberflächenaktives Mittel, enthält, wobei das oberflächenaktive Mittel vorzugsweise in Mengen von 0,5 bis 5,0 Gew.-%, bezogen auf das Gewicht der Beschichtungszusammensetzung, vorhanden ist, oder
- ein organisches Lösungsmittel
enthält.

12. Verfahren zur Herstellung einer Beschichtung auf einem flexiblen Substrat umfassend:
(a) Aufbringen einer Beschichtungszusammensetzung auf Wasserbasis auf das Substrat,
(b) Coaleszieren der Beschichtungszusammensetzung, um einen im Wesentlichen kontinuierlichen Film zu bilden, und
(c) Erwärmen des Films, um eine gehärtete Beschichtung auszubilden, wobei die Zusammensetzung auf Wasserbasis ein Carboxylgruppen enthaltendes Harz und ein Polycarbodiimid, das zur Erreichung von Hydrophilie modifiziert ist, enthält, und wobei das Polycarbodiimid eine Struktur aufweist, so dass eine Carbodiimideinheit oder eine Polycarbodiimideinheit an eine Einheit, ausgewählt aus Urethan, Thiourethan oder Harnstoff, und eine hydrophile Einheit, die sich von einem Polyetheramin mit einem Molekulargewicht von größer als 500 und einem Molverhältnis von Ethylenoxid zu Propylenoxid von größer als 1:1 ableitet, gebunden ist, wobei die hydrophile Einheit an einer oder mehreren endständigen Positionen des Polycarbodiimids über eine Harnstoffverknüpfung auftritt.

13. Verfahren nach Anspruch 12, bei dem das Carboxylgruppen enthaltende Harz ausgewählt ist aus einem Carboxylgruppen enthaltenden Acrylpolymer, einem Carboxylgruppen enthaltenden Polyester oder einem Carboxylgruppen enthaltenden Polyurethan.

14. Verfahren nach Anspruch 12, bei dem das Molverhältnis von Carboxylgruppen zu Carbodiimidgruppen 0,5 bis 5,0:1 beträgt.

15. Verfahren nach Anspruch 12, bei dem die hydrophile Einheit die Struktur aufweist: 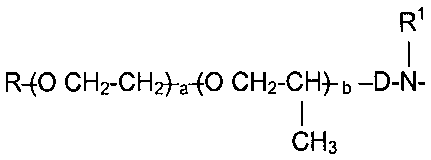 worin R gleich C₁- bis C₄-Alkyl ist, a gleich 5 bis 50 ist und b gleich 0 bis 35 ist, R¹ Wasserstoff oder ein Kohlenwasserstoffrest ist und D eine divalente Verbindungsgruppe oder eine chemische Bindung ist, gebunden an die Harnstoffverknüpfung.

## Revendications

1. Procédé de préparation d'un polycarbodiimide comprenant les étapes consistant à :
(a) chauffer un polyisocyanate en présence d'un catalyseur pour former un polycarbodiimide à fonction NCO terminale, un matériau renfermant de l'hydrogène actif étant ajouté avant, pendant ou après la formation du polycarbodiimide,
(b) faire réagir le polycarbodiimide de l'étape (a) avec une polyéther amine ayant un poids moléculaire supérieur à 500, de préférence d'au moins 1000 et ayant un rapport molaire oxyde d'éthylène/oxyde de propylène supérieur à 1:1, de préférence d'au moins 3:1.

2. Procédé conforme à la revendication 1, selon lequel la polyéther amine est choisie parmi :
(a) une polyéther amine comprenant une amine primaire, et
(b) une polyéther amine ayant la structure ci-dessous : 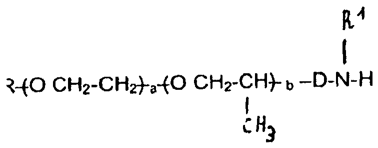 dans laquelle R représente un alkyl en C₁ à C₄, a est compris entre 5 et 50 et b est compris entre 0 et 35, R¹ représente l'hydrogène ou un radical hydrocarboné renfermant de préférence moins de 6 atomes de carbone et D est un groupe de liaison divalent ou une liaison chimique.

3. Procédé conforme à la revendication 1, selon lequel le polyisocyanate renferme entre 2 et 4 groupes isocyanates.

4. Procédé conforme à la revendication 1, selon lequel le polyisocyanate renferme un polyisocyanate (cyclo) aliphatique, le polyisocyanate étant de préférence choisi parmi l'isophorone diisocyanate et/ou le dicyclohexylméthane -4,4' diisocyanate.

5. Procédé conforme à la revendication 1, selon lequel le matériau renfermant de l'hydrogène actif est choisi parmi :
a) un matériau renfermant de l'hydrogène contenant entre deux et quatre hydrogènes actifs,
b) un polyol monomère ayant un indice d'hydroxyle de 200 à 2000, et
c) un polyol polymère choisi parmi les polyester polyols, les polyéther polyols, les polycarbonate polyols et les polymères (meth) acryliques renfermant un groupe hydroxyle.

6. Procédé conforme à la revendication 1, selon lequel le polycarbodiimide renferme 2 à 10 groupes carbodiimide répétitifs.

7. Procédé conforme à la revendication 1, selon lequel le matériau renfermant de l'hydrogène actif est ajouté avant ou pendant la formation du polycarbodiimide.

8. Polycarbodiimide ayant une formule structurelle choisie parmi les formules (a) et (b), y compris leurs mélanges : 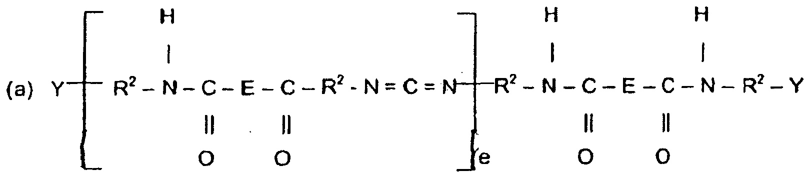 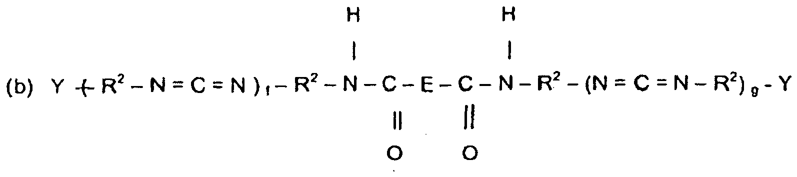 dans lesquelles e représente un nombre entier compris entre 2 et 20, f et g sont chacun au moins égaux à 1 et f + g est un nombre entière pouvant aller jusqu'à 20, E est un radical choisi parmi les radicaux : 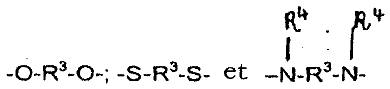 R² et R³ représentent des radicaux hydrocarbonés, R⁴ représente l'hydrogène ou un radical hydrocarboné, Y représente un radical de structure : 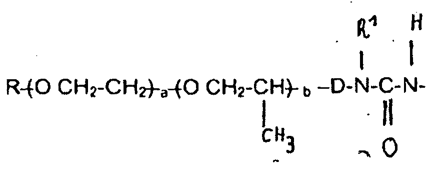 dans laquelle R représente un alkyl en C₁ à C₄, a est compris entre 5 et 50 et b est compris entre 0 et 35, et lorsque b est présent le rapport molaire de a à b est d'au moins 1:1, R¹ représente l'hydrogène ou un radical hydrocarboné et D représente un groupe de liaison divalent ou une liaison chimique, R² représente de préférence un radical (cyclo) ahphatique et si R² est un radical (cyclo)aliphatique E est un radical O-R³-O et R³ est un radical aliphatique renfermant entre 1 et 4 atomes de carbone.

9. Composition aqueuse thermodurcissable renfermant un polycarbon-diimide modifié pour le rendre hydrophile et une résine renfermant un groupe carboxyle, le polycarbodiimide ayant une structure telle qu'une unité carbodiimide ou polycarbodiimide est fixée à une unité dérivée d'un polyol, d'une polyamine ou d'un polythiol par l'intermédiaire d'une liaison uréthane, urée ou thiouréthane, et une unité hydrophile se présente au niveau d'au moins une position terminale du polycarbodiimide, cette unité hydrophile étant dérivée d'une polyéther amine ayant un poids moléculaire d'au moins 500, ayant un rapport molaire oxyde éthylène/oxyde de propylène supérieur à 1:1 et étant fixée au polycarbodiimide par l'intermédiaire d'une liaison urée.

10. Composition aqueuse thermodurcissable conforme à la revendication 9, dans laquelle:
i) l'unité hydrophile renferme la structure : 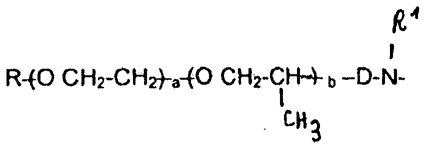 dans laquelle R représente un alkyl en C₁ à C₄, a est compris entre 5 et 50 et b est compris entre 0 et 35, R¹ représente l'hydrogène ou un radical hydrocarboné et D représente un groupe de liaison divalent ou une liaison chimique fixée à la liaison urée, ou
ii) la résine renfermant un groupe carboxy est choisie parmi les polymères acryliques renfermant un groupe carboxyle, les polyesters renfermant un groupe carboxyle ou les polyuréthanes renfermant un groupe carboxyle, ou
iii) le rapport des groupes carboxyle aux groupes carbodiimide est compris entre 0,5 à 5,0:1.

11. Composition aqueuse thermodurcissable conforme à la revendication 9, renfermant :
- un agent tensio-actif, de préférence un agent tensio-actif anionique, cet agent tensio-actif étant de préférence présent en quantité de 0,5 à 5,0 % en poids par rapport au poids de la composition de revêtement, ou
- un solvant organique.

12. Procédé de formation d'un revêtement sur un substrat flexible comprenant les étapes consistant à :
(a) appliquer une composition de revêtement aqueuse sur le substrat,
(b) faire coalescer le composition de revêtement pour former un film essentiellement continu, et
(c) chauffer ce film pour former un revêtement réticulé,
la composition aqueuse renfermant une résine contenant des groupes carboxyle et un polycarbodiimide modifié pour le rendre hydrophile, et le polycarbodiimide ayant une structure telle qu'une unité carbodiimide ou une unité polycarbodiimide est fixée à une unité choisie parmi les unités uréthane, thiouréthane ou urée et une unité hydrophile dérivée d'une polyéther amine ayant un poids moléculaire supérieur à 500 et présentant un rapport molaire oxyde d'éthylène/oxyde de propylène supérieur à 1:1, l'unité hydrophile étant présente au niveau d'au moins l'une des positions terminales du polycarbodiimide par l'intermédiaire d'une liaison urée.

13. Procédé conforme à la revendication 12, selon lequel la résine contenant un groupe carboxyle est choisi parmi les polymères acryliques contenant un groupe carboxyle les polyesters contenant un groupe carboxyle et les polyuréthanes contenant un groupe carboxyle.

14. Procédé conforme à la revendication 12, selon lequel le rapport molaire des groupes carboxyle aux groupes carbodiimide est compris entre 0,5 et 5,0:1.

15. Procédé conforme à la revendication 12, selon lequel l'unité hydrophile renferme la structure : 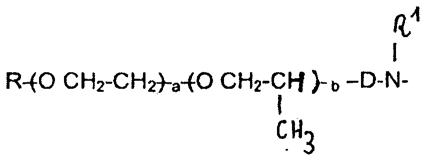 dans laquelle R est un alkyl en C₁ à C₄, a est compris entre 5 et 50 et b est compris entre 0 et 35, R¹ représente l'hydrogène ou un radical hydrocarboné et D est un groupe de liaison divalent ou une liaison chimique fixée à la liaison urée.
